# EUROPÄISCHE PATENTSCHRIFT

(11) **EP 2 911 996 B1**
(45) Veröffentlichungstag und Bekanntmachung des Hinweises auf die Patenterteilung: **21.03.2018**
(21) Anmeldenummer: 13780131.2
(22) Anmeldetag: 22.10.2013
(51) Int. Cl.: C04B 40/06, C08L 63/00, C08L 63/10, C08F 222/10

(54) **VERPACKUNG FÜR MEHRKOMPONENTEN-BINDEMITTELSYSTEME**
PACKAGING FOR MULTI-COMPONENT ADHESIVE SYSTEM
EMBALLAGE POUR SYSTÈMES DE LIANT À PLUSIEURS COMPOSANTS

(30) Priorität: 24.10.2012 DE 102012219480
(43) Veröffentlichungstag der Anmeldung: 02.09.2015
(73) Patentinhaber: Hilti Aktiengesellschaft, 9494 Schaan (LI)
(72) Erfinder: PFEIL, Armin, 86916 Kaufering (DE); THIEMANN, Frank, 86899 Landsberg/Lech (DE)
(86) Internationale Anmeldenummer: PCT/EP2013/072035
(87) Internationale Veröffentlichungsnummer: WO 2014/064084

(56) Entgegenhaltungen:
- EP-A1- 2 357 162
- WO-A1-94/19397

## Beschreibung

Die Erfindung betrifft eine Verpackung zum Aufbewahren von voneinander getrennt gelagerten Komponenten eines Mehrkomponenten-Bindemittels, insbesondere eine Dreikomponenten-Verpackung zum Aufbewahren eines Mörtelsystems auf Basis eines dualhärtenden Bindemittels.

Die Verwendung von Reaktivharzmassen auf der Basis von ungesättigten Polyesterharzen, Vinylesterharzen oder von Epoxidharzen als Klebe- und Haftmittel für die chemische Befestigungstechnik ist seit langem bekannt. Es handelt sich dabei um Zweikomponentensysteme, wobei eine Komponente das Reaktivharz und die andere Komponente das Härtungsmittel enthält. Andere, übliche Bestandteile wie Füllmittel, Beschleuniger, Stabilisatoren, Lösungsmittel einschliesslich Reaktivlösungsmittel (reaktive Verdünner) können in der einen und/oder der anderen Komponente enthalten sein. Durch Vermischen der beiden Komponenten wird dann die Reaktion unter Bildung eines gehärteten Produktes in Gang gebracht.

Üblicherweise werden Mehrkomponentenmassen, wie beispielsweise Mörtel-, Schaum- und Dichtmassen, dem Anwender als Zwei- oder Mehrkomponentenmassen in Kartuschen, Patronen und Foliengebinde als Injektionssysteme zur Verfügung gestellt. Foliengebinde haben sich dabei als Verpackung für derartige Massen bewährt und zeichnen sich insbesondere durch ihren gegenüber von Kartuschen geringen Materialanteil aus, der nach dem Ausbringen der Masse entsorgt werden muss. Zudem sind Foliengebinde einfach und kostengünstig herstellbar.

Grundsätzlich kommen in der chemischen Befestigungstechnik zwei Systeme zum Einsatz. Eines auf Basis radikalisch polymerisierbarer, ethylenisch ungesättigter Verbindungen, die in der Regel mit Peroxiden gehärtet werden und eines auf Epoxid-Amin-Basis. Das erste System zeichnet sich durch eine schnelle Aushärtung, insbesondere bei tiefen Temperaturen wie -10°C aus, weist jedoch Schwächen bei den Lastwerten auf. Dem gegenüber weisen die Epoxid-Amin-Systeme zwar eine langsamere Härtungsgeschwindigkeit auf, sind jedoch hinsichtlich der Lastwerte und der Robustheit des Systems vorteilhaft.

Um die Vorteile der beiden Systeme zu vereinen, laufen Entwicklungen dahingehend, dualhärtende Bindemittel zu entwickeln. Dies bedeutet, Systeme, deren Aushärtung sowohl radikalisch als auch durch Polyaddition erfolgt. Diese werden auch Hybridsysteme oder Hybridbindemittel genannt. Diese Hybridsysteme basieren auf Harzzusammensetzungen, die nach einem ersten Reaktionstyp härtbare Verbindungen, zum Beispiel radikalisch polymerisierbare Verbindungen, und nach einem zweiten, von dem ersten Reaktionstyp unterschiedlichen Reaktionstyp härtbare Verbindungen, die durch Polyaddition polymerisierbare Verbindungen, zum Beispiel Epoxide, enthalten. Eine Harzzusammensetzung auf Basis einer radikalisch polymerisierbaren Verbindung und eines Epoxids lassen sich beispielsweise mit einem Peroxid und einem Amin härten, wobei die radikalische Härtungsreaktion mit einer Übergangsmetallverbindung beschleunigt werden kann.

Ein derartiges System wird in der nicht vorveröffentlichten Anmeldung EP10153243 beschrieben.

Bekannt sind aber auch Systeme, die neben dem radikalisch polymerisierbaren Teil einen Teil enthalten, der zu einem Polyurethan oder Polyharnstoff führt, wie beispielsweise interpenetrierende Polymernetzwerke (IPNs) auf der Basis von Polymethacrylaten und Polyurethanen, als Klebstoffe und dergleichen.

Es ist üblich, Zweikomponenten-Bindemittel so aufzuteilen, dass die Harzkomponente, die die reaktiven Verbindungen und gegebenenfalls weitere Additive und Füllstoffe, wie Reaktivverdünner, Inhibitoren, Beschleuniger, Verdickungsmittel, Thixotropiermittel und anorganische Füllstoffe enthält, und die Härterkomponente, die das Härtungsmittel und gegebenenfalls weitere Additive und Füllstoffe, wie Verdickungsmittel, Thixotropiermittel, Phlegmatisierungsmittel, und anorganische Füllstoffe, enthält, räumlich getrennt verpackt sind, so dass erst eine Reaktion stattfindet, wenn die beiden Komponenten miteinander vermischt werden. Bei einem Folienbeutel als Verpackung ist die Harzkomponente in einem ersten Folienbeutel verpackt und die Härterkomponente in einem davon räumlich getrennten zweiten Folienbeutel verpackt. Ähnlich ist dies bei den ebenfalls verwendeten Patronen der Fall, wobei eine kleinere Patrone, welche die Härterkomponente enthält, in einer größeren Patrone, welche die Harzkomponente enthält, angeordnet ist. Bei einer Kartusche als Verpackung enthält diese üblicherweise zwei getrennte Kammern, um eine räumliche Trennung der Komponenten zu erreichen.

Für ein Hybridbindemittel, wie es in der Anmeldung EP10153243 beschrieben ist, würde in einem üblichen Zweibeutel-Injektionssystem die Harzkomponente, die in einem Folienbeutel enthalten ist, die radikalisch härtbare Verbindung, die mit einem Amin härtbare Verbindung, Katalysatoren, Beschleuniger, gegebenenfalls Reaktivverdünner, Inhibitoren und eine Verbindung zur Brückenbildung enthalten. Die Härterkomponente würde dann die beiden Härtungsmittel, das Peroxid und das Amin, enthalten.

Dies führt allerdings zu einigen Problemen. Auf der Härterseite ergibt sich das Problem, dass nur wenige Peroxide und Amine kurzzeitig lagerstabil kombiniert werden können, d.h. es ist keine Flexibilität bezüglich der Auswahl, vor allem der Aminhärter für das Epoxidharz gegeben. Ferner kann eine ausreichende Lagerstabilität selbst bei solchen Härtungsmitteln, die miteinander kombiniert werden können, nicht ausreichend gewährleistet werden. Dies führt unweigerlich zu einer nicht berechenbaren Beeinträchtigung der Aushärtung und der Leistungsfähigkeit der Bindemittel, d.h. der Verbundfestigkeit der Verankerungselemente.

Aber auch auf der Harzseite muss mit Problemen aufgrund einer Reaktion der Einzelkomponenten untereinander gerechnet werden.

Den Harzen bzw. den Harzkomponenten werden häufig Verbindungen zugesetzt, welche eine radikalische Polymerisation verzögern, um diese lagerstabil zu machen und/oder die Gelzeit einzustellen. Ein übliche und bewährte Verbindung ist 4-Hydroxy-2,2,6,6-tetramethylpiperidin-1-oxyl (Tempol). Aus der Literatur (z.B. Sheldon et al., Org. Biomol. Chem., 2003, 1, 3232; E.G. Rozantsev et al., Russ. Chem. Rev., 1971, 40 (3), 233) gibt es Hinweise, dass Tempol mit Cu(I)- und Cu(II)-Salzen, welche unter anderem als Katalysator für die Aktivierung des Peroxidhärters verwendet werden, vor allem in Gegenwart von Luftsauerstoff reagiert. Diese Zersetzungsreaktion wird auch für andere stabile Nitroxylradikale angenommen.

Somit ist bei der Konfektionierung der Verpackung für Hybridbindemittel, insbesondere nach der EP10153243 zu beachten, dass folgende Komponenten nicht miteinander kombiniert werden dürfen, um weder die Lagerstabilität noch die Aushärtezeit sowie die Leistungsfähigkeit des Bindemittels negativ zu beeinträchtigen:
- das Peroxid und das Amin,
- das Tempol und der Übergangsmetall-Beschleuniger,
- das Peroxid und die radikalisch polymerisierbare Verbindung,
- das Amin und die Epoxid-Verbindung und
- die radikalisch polymerisierbare Verbindung und das Amin.

Bezüglich der Verpackung muss ferner die Aufteilung der Einzelkomponenten so getroffen werden, dass beim Applizieren des Bindemittels, etwa beim Auspressen der Einzelkomponenten, die erforderlichen Mengenverhältnisse, insbesondere das Mischverhältnis von härtbarer Verbindung zu Härtungsmittel, eingehalten werden.

Für die Anwendung vor Ort bedeutet dies, dass die Harzzusammensetzung, der Peroxid-Härter, der Amin-Härter sowie der Beschleuniger räumlich so getrennt untergebracht werden müssen, dass eine unbeabsichtigte Reaktion, d.h. entweder ein Aushärten der Harzzusammensetzung oder eine Inaktivierung der übrigen Komponenten wie oben beschrieben, untereinander verhindert wird. Die Schwierigkeit besteht nun darin, ein mehrkomponentiges, dualhärtendes Bindemittel (Hybridbindemittel) so zu verpacken, dass eine Reaktion der Einzelkomponenten untereinander verhindert wird und das Bindemittel einfach vor Ort angewendet werden kann, etwa in herkömmlichen Glas- oder Kunststoffpatronen oder häufig verwendeten Auspressgeräten für Zweikomponenten-Bindemittel. Eine solche Verpackung ist derzeit nicht bekannt.

Aber auch in Hybridbindemitteln, die an Stelle des Epoxid-Amin-Systems ein System aufweisen, das beispielsweise zu Polyurethanen oder Polyharnstoffen führt, sind die Einzelkomponenten nicht beliebig mischbar, zumal für Systeme mit Polyharnstoffe ebenfalls Amine erforderlich sind.

Die Aufgabe der Erfindung ist daher, eine Verpackung für Mehrkomponenten-Bindemittelsysteme, insbesondere für Hybridbindemittel der eingangs erwähnten Art bereitzustellen, die ein stabile Lagerung ermöglicht, in bereits eingesetzten herkömmlichen Auspressgeräten verwendet werden kann und die geforderten Mischverhältnisse von härtbaren Verbindungen zu Härtungsmittel eingehalten werden.

Die Aufgabe wird durch die Verpackung gemäß Anspruch 1 gelöst. Bevorzugte Ausführungsformen sind den Unteransprüchen zu entnehmen.

Ein Vorteil der Erfindung liegt darin, dass bei Verwendung eines Hybridbindemittels auf Basis einer mit Peroxiden härtbaren und einer mit Aminen härtbaren Harzkomponente beliebige Peroxide und beliebige Amine eingesetzt werden können, so dass eine große Flexibilität bei der Formulierung der beiden Härtungssysteme erhalten bleibt und dass eine beliebige Menge an Radikalfänger(n) gewählt werden kann, um die Gelzeit individuell gemäß den Anforderungen frei einstellen zu können.

Darüber hinaus ermöglicht es die Erfindung größere absolute Peroxidmengen einzusetzen, ohne dass der Anteil des Peroxids bezogen auf die Härterkomponente den kennzeichnungsrechtlichen Grenzwert von 1 Gew.-% überschreitet. Somit muss selbst bei hohen absoluten Peroxidmengen die Verpackung gegebenenfalls nicht mehr als "brandfördernd" gekennzeichnet werden, was zu höherer Anwenderakzeptanz führt.

Ein weiterer Vorteil der Erfindung liegt darin, dass gegenüber den herkömmlichen Zweikomponenten-Systemen auf Basis radikalisch härtbarer Harze und auf Basis von Epoxid-Harzen, bei denen der Härterkomponente (Peroxid) ein Phlegmatisierungsmittel zur Erhöhung der Lagerstabilität zugemischt wird, das Epoxidharz als Phlegmatisierungsmittel dient, so dass auf eine zusätzliche Zugabe an Phlegmatisierungsmitteln verzichtet werden kann, denn diese Phlegmatisierungsmittel können die mechanischen Eigenschaften des ausgehärteten Materials beeinträchtigen und sind häufig auch als umweltgefährdend einzustufen.

Im Sinne der Erfindung bedeutet "*Hybridbindemittel*" bzw. "*dualhärtendes Bindemittel*" eine Bindemittelzusammensetzung, die eine Harzmischung auf Basis einer radikalisch polymerisierbaren Verbindung zusammen mit einem Härtungsmittel für die radikalische Polymerisation, der Radikalinitiator, und eine Harzmischung auf Basis einer durch Polyaddition polymerisierbaren Verbindung zusammen mit einem Härtungsmittel für die Polyaddition enthält. Die einzelnen Bestandteile der beiden Harzmischungen, nämlich die radikalisch polymerisierbare Verbindung, die durch Polyaddition polymerisierbare Verbindung, die Härtungsmittel, der Beschleuniger, der Inhibitor, ggf. die Verbindung zur Verbrückung (Verbindung mit zwei funktionellen Gruppen, wovon eine radikalisch und die andere durch Polyaddition polymerisieren kann), der Reaktivverdünner, die Additive und Füllstoffe, werden in Sinne der Erfindung als "*Einzelkomponenten*" bezeichnet. Ferner ist ein "*Stabilisator*" eine Verbindung, welche die Härtungsreaktion, insbesondere die radikalische Polymerisation verlangsamt, hemmt oder verhindert, wobei die Verbindung in solch einer Menge der radikalisch polymerisierbaren Verbindung zugegeben wird, dass die Harzmischung lagerstabil wird, aber die Gelzeit bei der Härtung nicht beeinträchtigt wird. Demgegenüber ist ein "*Inhibitor*" eine Verbindung, welche die Härtungsreaktion, insbesondere die radikalische Polymerisation verlangsamt, hemmt oder verhindert, wobei diese jedoch in solch einer Menge der radikalisch polymerisierbaren Verbindung zugegeben wird, dass die Gelzeit bei der Härtung, verglichen mit der Harzmischung ohne Inhibitor, verlängert wird. Eine Verbindung kann somit sowohl Stabilisator als auch Inhibitor sein. Es können aber auch unterschiedliche Verbindung eingesetzt werden.

Gegenstand der Erfindung wie beansprucht ist eine Verpackung für Mehrkomponenten-Bindemittel, die **(I)** eine Harzkomponente mit **(a)** mindestens einer radikalisch polymerisierbaren Verbindung, **(b)** mindestens einer durch Polyaddition polymerisierbaren Verbindung, **(c)** einem Beschleuniger, gegebenenfalls **(d)** mindestens einem Inhibitor und gegebenenfalls **(e)** mindestens einer Verbindung mit zwei funktionellen Gruppen, wovon eine radikalisch und die andere durch Polyaddition (co)polymerisieren kann, und **(II)** eine Härterkomponente mit **(A)** mindestens einem Härtungsmittel für die Polyaddition und **(B)** mindesten einem Radikalinitiator, umfassen, gekennzeichnet durch einen ersten Abschnitt **A1,** der zumindest drei Einzelkomponenten des Mehrkomponenten-Bindemittels enthält, und einen zweiten Abschnitt **A2,** der zumindest zwei Einzelkomponenten des Mehrkomponenten-Bindemittels enthält, wobei die Einzelkomponenten des Mehrkomponenten-Bindemittels derart auf die beiden Abschnitte A1 und A2 aufgeteilt sind, dass eine Aushärtung des Bindemittels erst nach dem vollständigen Mischen der Einzelkomponenten erfolgt und eine vorzeitige Reaktion zwischen den Einzelkomponenten verhindert wird.

Die beiden Abschnitte A1 und A2 der Verpackung können als voneinander getrennte Teilbereiche eines Behältnisses, wobei die Trennung durch eine Trennwand und dergleichen erfolgt, oder ein zweites eigenständiges Behältnis, welches in dem ersten Behältnis angeordnet ist, oder als eigenständige, räumlich getrennte Behältnisse ausgebildet sein.

Als radikalisch polymerisierbare Verbindungen sind erfindungsgemäß ethylenisch ungesättigte Verbindungen, cyclische Monomere, Verbindungen mit Kohlenstoff-Kohlenstoff-Dreifachbindungen und Thiol-Yne/Ene-Harze geeignet, wie sie dem Fachmann bekannt sind.

Von diesen Verbindungen ist die Gruppe der ethylenisch ungesättigten Verbindungen bevorzugt, die Styrol und Derivate davon, (Meth)acrylate, Vinylester, ungesättigte Polyester, Vinylether, Allylether, Itaconate, Dicyclopentadien-Verbindungen und ungesättigte Fette umfasst, wovon insbesondere ungesättigte Polyesterharze und Vinylesterharze geeignet und beispielsweise in den Anmeldungen EP 1 935 860 A1, DE 195 31 649 A1 und WO 10/108939 A1 beschrieben sind. Vinylesterharze sind dabei aufgrund ihrer hydrolytischen Beständigkeit und ausgezeichneten mechanischen Eigenschaften am stärksten bevorzugt.

Im Sinne der Erfindung sind Vinylesterharze Oligomere oder Polymere mit mindestens einer (Meth)acrylat-Endgruppe, so genannte (Meth)acrylat-funktionalisierte Harze, wozu auch Urethan(meth)acrylat-Harze und Epoxy(meth)acrylate zählen.

Vinylesterharze, die nur in Endstellung ungesättigten Gruppen aufweisen, werden zum Beispiel durch Umsetzung von Epoxid-Oligomeren oder -Polymeren (z.B. Bisphenol A-digylcidylether, Epoxide vom Phenol-Novolak-Typ oder Epoxid-Oligomere auf der Basis von Tetrabrombisphenol A) mit beispielsweise (Meth)acrylsäure oder (Meth)acrylamid erhalten. Bevorzugte Vinylester-Harze sind (Meth)acrylatfunktionalisierte Harze und Harze, die durch Umsetzung eines Epoxid-Oligomers oder -Polymers mit Methacrylsäure oder Methacrylamid, bevorzugt mit Methacrylsäure, erhalten werden. Beispiele solcher Verbindungen sind aus den Anmeldungen US 3297745 A, US 3772404 A, US 4618658 A, GB 2217722 A1, DE 3744390 A1 und DE4131457 A1 bekannt.

Als Radikalinitiator können die üblicherweise verwendeten und dem Fachmann bekannten Radikalstarter verwendet werden. Bevorzugt sind Verbindungen, die die Polymerisation bei Raumtemperatur initiieren können, wobei besonders bevorzugt der Radikalinitiator ein Peroxid ist.

Als Verbindungen, die durch Polyaddition polymerisieren können, sind die üblicherweise verwendeten und dem Fachmann bekannten Verbindungen geeignet. Beispielhaft sollen Epoxide, Isocyanate, β-Ketoester, wie Acetoacetate, Cyclocarbonate und Ene, d.h. elektronenarme Kohlenstoff-KohlenstoffDoppelbindungen, genannt werden, wobei die Verbindungen mindestens eine, bevorzugt zwei oder mehrere der funktionellen Gruppen, d.h. Epoxid-, Isocyanat-, Acetoacetat-, Cyclocarbonat und En-Gruppen aufweisen können. Bevorzugt sind Epoxid-Verbindungen und stärker bevorzugt Epoxid-Verbindungen mit mindestens zwei Epoxid-Gruppen pro Molekül. Dementsprechend können als Härtungsmittel für die Polyaddition Verbindungen eingesetzt werden, welche aktive Wasserstoffatome enthalten und nicht ionisch sind. Beispielhaft können Amine, Alkohole und Thiole genannt werden, wobei die Verbindungen mindestens eine, bevorzugt zwei oder mehrere Amino-, Thio- oder Hydroxy-Gruppen pro Molekül aufweisen können. Bevorzugt sind Amine und stärker bevorzugt Amine mit mindestens zwei AminoGruppen pro Molekül.

Wird als Verbindung, die durch Polyaddition polymerisieren kann, eine En-Verbindung eingesetzt, so können parallel sowohl die radikalische Polymerisation als auch die Polyaddition ablaufen, sofern die En-Verbindung hinreichend elektrophil ist. Dies hat den Vorteil, dass als Harzkomponente nur eine Verbindung eingesetzt werden muss und so weniger Schwierigkeiten bei der Konfektionierung eines derartigen Hybridbindemittels erwartet werden.

Durch die Wahl der Verbindung, die durch Polyaddition polymerisieren kann, kann die Eigenschaft des Hybridbindemittels beeinflusst und dementsprechend für die gewünschte Verwendung eingestellt werden.

In einer bevorzugten Ausführungsform der Erfindung ist die durch Polyaddition polymerisierbare Verbindung eine Epoxid-Verbindung und das entsprechende Härtungsmittel **(A)** ein Amin. Für den Fall, dass das Hybridbindemittel eine Verbindung mit zwei funktionellen Gruppen, wovon eine radikalisch und die andere durch Polyaddition (co)polymerisieren kann, enthält, ist die funktionelle Gruppe, die durch Polyaddition polymerisieren kann, eine Epoxid-Gruppe.

Als Beschleuniger und Inhibitoren können je nach Anwendungsgebiet des Hybridbindemittels die üblicherweise verwendeten und dem Fachmann bekannten Verbindungen verwendet werden. Geeignete Beschleuniger sind beispielsweise Amine, bevorzugt tertiäre Amine und/oder Metallsalze. Geeignete Inhibitoren sind beispielsweise die für radikalisch polymerisierbare Verbindungen üblicherweise verwendeten Inhibitoren, wie phenolische und nicht-phenolische Verbindungen, z.B. stabile Radikale, wie Galvinoxyl- und N-oxyl-Radikale, und/oder Phenothiazine.

Für Anwendungen im Bereich der Befestigungstechnik, etwa als Reaktionsharzmörtel wird im Zusammenhang mit den Einzelkomponenten auf die in der Anmeldung EP10153243 beschriebenen Verbindungen verwiesen, deren Inhalt hiermit in diese Anmeldung aufgenommen wird.

Bevorzugt enthält der erste Abschnitt **A1 (a)** mindestens eine radikalisch polymerisierbare Verbindung, **(c)** mindestens einen Beschleuniger, **(A)** mindestens ein Härtungsmittel für die Polyaddition, gegebenenfalls **(d)** mindestens einen Inhibitor und gegebenenfalls **(e)** mindestens eine Verbindung mit zwei funktionellen Gruppen, wovon eine radikalisch und die andere durch Polyaddition (co)polymerisieren kann. Damit sind **(A)** das Härtungsmittel für die Polyaddition und **(B)** der Radikalinitiator getrennt voneinander gelagert und das Mehrkomponenten-Bindemittel ist nicht auf bestimmte, nicht miteinander reagierende Kombinationen aus Radikalinitiatoren, wie Peroxide, und Härtungsmitteln für die Polyaddition, wie Amine, sowie auf bestimmte Mengen an Einzelkomponenten beschränkt. Dadurch wird erreicht, dass beliebige Radikalinitiatoren und beliebige Härtungsmittel für die Polyaddition, entsprechend den erwünschten Eigenschaften des Bindemittels, verwendet werden können. Sowohl das Härtungsmittel für die Polyaddition als auch der Radikalinitiator können als Gemische mehrerer Verbindungen vorliegen. Dementsprechend ist eine große Flexibilität bei der Formulierung der Härter gewährleistet.

Der zweite Abschnitt **A2** enthält entsprechend **(b)** mindestens eine durch Polyaddition polymerisierbare Verbindung und **(B)** mindestens einen Radikalinitiator. Bei einem System auf Epoxid-Amin-Basis, das ein Peroxid als Radikalinitiator enthält, kann hierdurch eine Phlegmatisierung des Peroxids erreicht werden, was sich positiv auf die Lagerstabilität auswirkt. Da die Epoxid-Verbindung, mehr Volumen aufweist als das Amin, kann damit erreicht werden, dass größere absolute Peroxidmengen verpackt werden können und dennoch der Peroxidanteil weniger als die kennzeichnungspflichtigen 1 Gew.-% beträgt, so dass eine Kennzeichnung, zumindest hinsichtlich des Peroxids nicht mehr erforderlich ist. Dies führt zu einer größeren Kundenakzeptanz.

Bevorzugt sind die zumindest drei Einzelkomponenten **(a), (c)** und **(A)** und falls, vorhanden **(d)** und **(e)** des Mehrkomponenten-Bindemittels in dem ersten Abschnitt **A1** in separaten Kammern vorgesehen, um eine weitere getrennte Lagerung untereinander reagierender Einzelkomponenten zu erreichen.

Die Kammern können dabei als Teilbereiche eines Behältnisses oder als eigenständige, räumlich getrennte Behältnisse ähnlich wie bei den Abschnitten ausgebildet sein.

Als vorteilhaft hat sich dabei herausgestellt, die Einzelkomponenten in dem ersten Abschnitt **A1** so aufzuteilen, dass die erste Kammer **K1 (a)** mindestens eine radikalisch polymerisierbare Verbindung und gegebenenfalls **(d)** mindestens einen Inhibitor und gegebenenfalls **(e)** mindestens eine Verbindung mit zwei funktionellen Gruppen, wovon eine radikalisch und die andere durch Polyaddition (co)polymerisieren kann, enthält, und die zweite Kammer **K2 (A)** mindestens ein Härtungsmittel für die Polyaddition und **(c)** mindestens einen Beschleuniger enthält. Damit ist, falls ein Inhibitor vorhanden ist, keine Reaktion zwischen dem Beschleuniger **(c)** und dem Inhibitor **(d)** mehr möglich, so dass ungünstige Auswirkungen auf die Lagerstabilität, die von dieser Reaktion herrühren, und der damit verbundene Gelzeitdrift vermieden werden kann. Ferner können Beschleuniger und Inhibitoren verwendet werden, die nicht miteinander kompatibel sind.

Beispielsweise können Metallsalze, wie Cu(II)-Salze, als Beschleuniger und stabile Nitroxylradikale, wie Tempol, als Inhibitor in einem Mehrkomponenten-Bindemittel eingesetzt werden, ohne dass dies eine Zersetzung des Nitroxylradikals durch das Metallsalz zur Folge hat. Auch die Konzentration des eingesetzten Nitroxylradikals ist variabel, so dass die Gelzeit der radikalisch härtenden Komponente entsprechend den Anforderungen des Hybridhärters frei eingestellt werden kann. Darüber hinaus können anstelle oder zusätzlich zu dem Nitroxylradikal andere Inhibitoren eingesetzt werden, die etwa mit dem Cu(II)-Salz nicht kompatibel sind, wie Phenole oder Catechole.

Ein weiterer Vorteil liegt darin, dass sich durch die Kombination von **(c)** Beschleuniger (z.B. Cu(II)-Naphthenat) und **(A)** Härtungsmittel für die Polyaddition (z.B. Amin) eine zusätzliche Voraktivierung des Beschleunigers erreichen lässt. Auch können weitere Liganden in **(A)** dem Härtungsmittel für die Polyaddtion (z.B. Amin) gelöst werden, die den Beschleuniger, wie etwa ein Cu(II)-Salz, aktivieren.

In einer bevorzugten Ausführungsform der Erfindung enthält der erste Abschnitt **A1,** insbesondere die erste Kammer **K1** ferner mindestens noch einen Reaktivverdünner für die radikalisch polymerisierbare Verbindung. Damit kann die Viskosität des der radikalisch polymerisierbaren Verbindung auf einen gewünschten Wert eingestellt werden.

Das Mischverhältnis von dem ersten Abschnitt zu dem zweiten Abschnitt **A1:A2** hängt zum einen von den verwendeten Komponenten und zum anderen von dem Anwendungsbereich, in dem die erfindungsgemäße Verpackung eingesetzt werden soll. Es kann im Bereich von 1:1 bis 10:1, bevorzugt 3:1 bis 7:1 eingestellt werden. Im Bereich der Befestigungstechnik hat sich für die meisten Anwendungen eines Hybridbindemittles als Mörtelmasse für chemische Befestigungszwecke als zweckmäßig herausgestellt, das Mischverhältnis A1:A2 so einzustellen, dass es etwa 3:1 oder 5:1 beträgt.

Sind in dem ersten Abschnitt **A1** eine erste Kammer **K1** und eine zweite Kammer **K2** vorgesehen, beträgt vorzugsweise das Mischverhältnis von der ersten Kammer **K1** zu der zweiten Kammer **K2** 4:1 bis 1:4, insbesondere 4:1 bis 1:1.

Die erfindungsgemäße Verpackung enthält viele Freiheitsgrade, um die eben genannten Mischverhältnisse A1:A2 und K1:K2 einzustellen. Den größten Einfluss auf die beiden Verhältnisse hat jedoch bei Verwendung eines Epoxid-Amin-Systems als durch Polyaddition polymerisierbare Verbindung der HAV-Wert (Amin-Equivalent-Gewicht) des Amins. Durch Auswahl eines Amins mit größerem HAV-Wert kann der Anteil der zweiten Kammer K2, welche (A) das Amin und (c) den Beschleuniger enthält, derart vergrößert werden, dass das Verhältnis A1:A2 variiert werden kann. Aber auch das Verhältnis der mit einem Amin reagierenden Verbindung zu dem Amin sowie das Verhältnis der radikalisch polymerisierbaren Verbindung zu der mit einem Amin reagierenden Verbindung haben einen Einfluss auf die Mischverhältnisse A1:A2 und K1:K2.

In einer besonders bevorzugten Ausführungsform der Erfindung ist die Dreikomponenten-Verpackung ein Foliengebinde mit einem ersten Folienbeutel **Fb1,** der zumindest drei Einzelkomponenten des Mehrkomponenten-Bindemittels enthält, und einem zweiten Folienbeutel **Fb2,** der zumindest zwei Einzelkomponenten des Mehrkomponenten-Bindemittels enthält, wobei die Einzelkomponenten des Mehrkomponenten-Bindemittels derart auf die beiden Folienbeutel **Fb1** und **Fb2** aufgeteilt sind, dass eine Aushärtung des Bindemittels erst nach dem vollständigen Mischen der Einzelkomponenten erfolgt und eine vorzeitige Reaktion zwischen den Einzelkomponenten verhindert wird.

Der Vorteil des erfindungsgemäßen Foliengebindes liegt darin, dass es in herkömmlichen und häufig eingesetzten Auspressgeräten verwendet werden kann.

Das Foliengebinde eignet sich bevorzugt für Hybridbindemittel auf Basis einer dualhärtenden mehrkomponentigen Bindemittelsystems, insbesondere zur Aufbewahrung des in der Anmeldung EP10153243 beschriebenen Hybridbindemittels.

In einer bevorzugten Ausführungsform umfasst das erfindungsgemäße Foliengebinde ferner ein Kopfteil, mit zumindest zwei Aufnahmeabschnitten für jeweils ein Ende eines Folienbeutels. Insbesondere sind die Folienbeutel mit ihren entsprechenden Enden an dem Kopfteil unlösbar festgelegt und somit unverlierbar mit diesem verbunden. Damit ist das gesamte Foliengebinde einfach in die Aufnahme eines Auspressgerätes einleg- und aus diesem entfernbar. Vorteilhaft sind die Folienbeutel an dem Kopfteil festgeklebt. Erfindungsgemäß verwendbare Kopfteile sind beispielsweise in den Anmeldungen DE 10 2007 000 802 A1 und DE 91 00 054 U1 beschrieben.

Die Abmessungen des Foliengebindes entsprechen im Wesentlichen den Abmessungen eines Foliengebindes für zweikomponentige Massen, womit das erfindungsgemäße Foliengebinde mit herkömmlichen, bereits auf dem Markt befindlichen Auspressgeräten ausbringbar ist, wobei allenfalls geringfügige Anpassungen erforderlich sein können. Je nach Art und Erfordernisse der im Foliengebinde eingelagerten Masse können die Komponenten im entsprechenden Verhältnis zueinander im Foliengebinde vorgesehen werden.

Bezüglich der Zusammensetzung des Hybridbindemittels wird auf die nicht vorveröffentlichte Anmeldung EP10153243 Bezug genommen, deren Inhalt hiermit in diese Anmeldung aufgenommen wird.

Anhand der folgenden empirischen Beispiele soll erläutert werden, wie der HAV-Wert des Amin-Härters, das Verhältnis von Epoxid zu Amin und das Verhältnis von Epoxid zu Vinylester das Mischverhältnis A1:A2 ≈ 3:1 beeinflussen können.

### BEISPIELE

Ein erstes Hybridbindemittel setzt sich wie folgt zusammen, wobei das Hybridbindemittel auf dem Beispiel 1 der nicht vorveröffentlichten Anmeldung EP10153243 basiert:
Die folgenden Beispiele zeigen, dass vor allem der HAV-Wert des Aminhärters ein wichtiger Hebel bei der Einstellung des Mischverhältnisses A1:A2 = 3:1 ist. Beispiele 2 und 3 wären geeignet, durch geeignete Wahl der Füllstoffe und des Füllgrades der einzelnen Komponenten K1, K2 und das Mischverhältnis A1:A2 = 3:1 zu erreichen.

| **A1+A2+B** | Startrezeptur ungefüllt | | | | | | |
|---|---|---|---|---|---|---|---|
| | | | | | | | |
| **Komponente A1 ("Vinylester")** | Dichte | Masse | Volumen | Vol A1, A2:B | Vol. A:B | Vol. A:B | Vol. A1:A2 |
| BADGE-Vinylester (Annahme n=0,1) ^{a)} | 1,16 | 19,38 | 16,71 | | | | |
| BDDMA ^{b)} | 1,02 | 12,85 | 12,60 | 44,27 | | | |
| GlyMA ^{c)} | 1,08 | 16,16 | 14,96 | | 58,69 | | 3,07 |

| **Komponente A2 ("Aminhärter")** | | | | | | | |
|---|---|---|---|---|---|---|---|
| Dytek ® A ^{d)} | 0,86 | 12,40 | 14,42 | 14,42 | | 1,31 | |
| | | | | | | | |

| **Komponente B ("Epoxy/Peroxy")** | | | | | | | |
|---|---|---|---|---|---|---|---|
| BADGE Standardharz (Annahme n=0,1) | 1,16 | 51,61 | 44,49 | 44,97 | 44,97 | | |
| Trigonox C ^{e)} | 1,05 | 0,50 | 0,48 | | | | |

| | | | | | | | |
|---|---|---|---|---|---|---|---|
| ^{a)} BADGE = Bisphenol-A-diglycidylether ^{b)} BDDMA = Butandiol-1,4-dimethacrylat ^{c)} GlyMA = Glycidylmethacrylat ^{d)} Dytek ® A = 2-Methylpentamethylendiamin (Invista) ^{e)} Triginox ® C = tert.-Butylperoxybenzoat (AkzoNobel) | | | | | | | |

### Beispiel 1

Die Zusammensetzung von Beispiel 1 entspricht der Startrezeptur, mit dem Unterschied, dass ein Aminhärter mit Dichte 1g/L und HAV 45 g/val anstelle von Dytek® A eingesetzt wurde und das Verhältnis Epoxid:Amin abgesenkt wurde, so dass das Verhältnis von Vinylester:Epoxid ca. 1:1 beträgt (Epoxid-Harz um 20% reduziert).

| **A1+A2+B** | | | | | | | |
|---|---|---|---|---|---|---|---|
| | | | | | | | |
| **Komponente A1 ("Vinylester")** | Dichte | Masse | Volumen | Vol A1, A2:B | Vol. A:B | Vol. A:B | Vol. A1:A2 |
| BADGE-Vinylester (Annahme n=0,1) | 1,16 | 19,38 | 16,71 | | | | |
| BDDMA | 1,02 | 12,85 | 12,60 | 44,27 | | | |
| GlyMA | 1,08 | 16,16 | 14,96 | | 63,51 | | 2,30 |

| **Komponente A2 ("Aminhärter")** | | | | | | | |
|---|---|---|---|---|---|---|---|
| Aminhärter HAV=45 ^{f)} | 1,00 | 19,24 | 19,24 | 19,24 | | 1,76 | |
| | | | | | | | |

| **Komponente B** ("**Epoxy**/**Peroxy**") | | | | | | | |
|---|---|---|---|---|---|---|---|
| BADGE Standardharz (Annahme n=0,1) | 1,16 | 41,29 | 35,59 | 36,07 | 36,07 | | |
| Trigonox C | 1,05 | 0,50 | 0,48 | | | | |

| | | | | | | | |
|---|---|---|---|---|---|---|---|
| ^{f)} z.B. EPIKURE® 3200 oder EPIKURE® 3290 der Firma Hexion Specialty Chemicals | | | | | | | |

### Beispiel 2

Die Zusammensetzung von Beispiel 1 entspricht der Startrezeptur, mit dem Unterschied, dass ein Aminhärter mit Dichte 1g/L und HAV 90 g/val anstelle von Dytek® A eingesetzt wurde, das Verhältnis Epoxid:Amin abgesenkt wurde, so dass das Verhältnis von Vinylester:Epoxid ca. 1:1 beträgt (Epoxid-Harz um 20% reduziert) und dass der Aminanteil um 20% erhöht wurde, um einen leichten Aminüberschuss (20%) anstelle eines Unterschusses (15%) zu erreichen.

| **A1+A2+B** | | | | | | | |
|---|---|---|---|---|---|---|---|
| | | | | | | | |
| **Komponente A1 ("Vinylester")** | Dichte | Masse | Volumen | Vol A1, A2:B | Vol. A:B | Vol. A:B | Vol. A1:A2 |
| BADGE-Vinylester (Annahme n=0,1) | 1,16 | 19,38 | 16,71 | | | | |
| BDDMA | 1,02 | 12,85 | 12,60 | 44,27 | | | |
| GlyMA | 1,08 | 16,16 | 14,96 | | 90,45 | | 0,96 |

| **Komponente A2 ("Aminhärter")** | | | | | | | |
|---|---|---|---|---|---|---|---|
| Aminhärter HAV=90 ^{g)} | 1,00 | 46,18 | 46,18 | 46,18 | | 2,51 | |
| | | | | | | | |

| **Komponente B ("Epoxy/Peroxy")** | | | | | | | |
|---|---|---|---|---|---|---|---|
| BADGE Standardharz (Annahme n=0,1) | 1,16 | 41,29 | 35,59 | 36,07 | 36,07 | | |
| Trigonox C | 1,05 | 0,50 | 0,48 | | | | |

| | | | | | | | |
|---|---|---|---|---|---|---|---|
| ^{g)} z.B. EPIKURE® 3046 oder EPIKURE® 3055 der Firma Hexion Specialty Chemicals | | | | | | | |

### Beispiel 3

Die Zusammensetzung von Beispiel 1 entspricht der Startrezeptur, mit dem Unterschied, dass ein Aminhärter mit Dichte 1g/L und HAV 110 g/val anstelle von Dytek® A eingesetzt wurde, das Verhältnis Epoxid:Amin abgesenkt wurde, so dass das Verhältnis von Vinylester:Epoxid ca. 1:1 beträgt (Epoxid-Harz um 20% reduziert) und dass der Aminanteil um 20% erhöht wurde, um einen leichten Aminüberschuss (20%) anstelle eines Unterschusses (15%) zu erreichen.

| **A1+A2+B** | | | | | | | |
|---|---|---|---|---|---|---|---|
| | | | | | | | |
| **Komponente A1 ("Vinylester")** | Dichte | Masse | Volumen | Vol A1, A2:B | Vol. A:B | Vol. A:B | Vol. A1:A2 |
| BADGE-Vinylester (Annahme n=0,1) | 1,16 | 19,38 | 16,71 | | | | |
| BDDMA | 1,02 | 12,85 | 12,60 | 44,27 | | | |
| GlyMA | 1,08 | 16,16 | 14,96 | | 100,71 | | 0,78 |

| **Komponente A2 ("Aminhärter")** | | | | | | | |
|---|---|---|---|---|---|---|---|
| Aminhärter HAV=110 ^{h)} | 1,00 | 56,44 | 56,44 | 56,44 | | 2,79 | |
| | | | | | | | |

| **Komponente B ("Epoxy/Peroxy")** | | | | | | | |
|---|---|---|---|---|---|---|---|
| BADGE Standardharz (Annahme n=0,1) | 1,16 | 41,29 | 35,59 | 36,07 | 36,07 | | |
| Trigonox C | 1,05 | 0,50 | 0,48 | | | | |

| | | | | | | | |
|---|---|---|---|---|---|---|---|
| ^{h)} z.B. EPIKURE® 3061 oder EPIKURE® 3388 der Firma Hexion Specialty Chemicals | | | | | | | |

## Patentansprüche

1. Verpackung für Mehrkomponenten-Bindemittel, das
**(I)** eine Harzkomponente mit
**(a)** mindestens einer radikalisch polymerisierbaren Verbindung,
**(b)** mindestens einer durch Polyaddition polymerisierbaren Verbindung,
**(c)** mindestens einem Beschleuniger,
**(d)** mindestens einem Inhibitor und
**(e)** gegebenenfalls mindestens einer Verbindung mit zwei funktionellen Gruppen, wovon eine radikalisch und die andere durch Polyaddition (co)polymerisieren kann, und
**(II)** eine Härterkomponente mit
**(A)** mindestens einem Härtungsmittel für die Polyaddition und
**(B)** mindesten einem Radikalinitiator,
umfasst, mit
einem ersten Abschnitt **A1,** der zumindest drei Einzelkomponenten des Mehrkomponenten-Bindemittels enthält,
einem getrennt davon angeordneten zweiten Abschnitt **A2,** der zumindest zwei Einzelkomponenten des Mehrkomponenten-Bindemittels enthält, wobei die Einzelkomponenten des Mehrkomponenten-Bindemittels derart auf die beiden Abschnitte **A1** und **A2** aufgeteilt sind, dass eine Aushärtung des Bindemittels erst nach dem vollständigen Mischen der Einzelkomponenten erfolgt und eine Reaktion zwischen den Einzelkomponenten verhindert wird, **dadurch gekennzeichnet, dass** die zumindest drei Einzelkomponenten des Mehrkomponenten-Mörtelsystems in dem ersten Abschnitt **A1** in separaten Kammern **K1** und **K2** vorgesehen sind, wobei eine erste Kammer **K1**
**(a)** mindestens eine radikalisch polymerisierbare Verbindung,
**(d)** mindestens einen Inhibitor und
**(e)** gegebenenfalls mindestens eine Verbindung mit zwei funktionellen Gruppen, wovon eine radikalisch und die andere durch Polyaddition (co)polymerisieren kann, enthält
und eine zweite Kammer **K2**
**(A)** das Härtungsmittel für die Polyaddition und
**(c)** mindestens einen Beschleuniger enthält.

2. Verpackung nach Anspruch 1, wobei der erste Abschnitt **A1**
**(a)** mindestens eine radikalisch polymerisierbare Verbindung,
**(c)** mindestens einen Beschleuniger,
**(A)** mindestens ein Härtungsmittel für die Polyaddition,
**(d)** mindestens einen Inhibitor und
**(e)** gegebenenfalls mindestens eine Verbindung mit zwei funktionellen Gruppen, wovon eine radikalisch und die andere durch Polyaddition (co)polymerisieren kann,
enthält und der zweite Abschnitt **A2,**
**(b)** mindestens eine durch Polyaddition polymerisierbare Verbindung, und
**(B)** mindestens einen Radikalinitiator, enthält.

3. Verpackung nach Anspruch 1 oder 2, wobei in der ersten Kammer **K1** des ersten Abschnitts **A1** ferner mindestens noch ein Reaktivverdünner für die radikalisch polymerisierbare Verbindung enthalten ist.

4. Verpackung nach einem der vorhergehenden Ansprüche, wobei das Mischverhältnis von dem ersten Abschnitt **A1** zu dem zweiten Abschnitt **A2** A1:A2 zwischen 1:1 und 10:1 beträgt.

5. Verpackung nach Anspruch 4, wobei das Mischverhältnis A1:A2 3:1 oder 5:1 beträgt.

6. Verpackung nach einem der vorhergehenden Ansprüche, wobei das Mischverhältnis von der ersten Kammer **K1** zu der zweiten Kammer **K2** 4:1 bis 1:4 beträgt.

7. Verpackung nach Anspruch 6, wobei das Mischverhältnis von der ersten Kammer **K1** zu der zweiten Kammer **K2** 4:1 bis 1:1 beträgt.

8. Verpackung nach einem der vorhergehenden Ansprüche, wobei die mindestens eine durch Polyaddition polymerisierbare Verbindung (b) eine Epoxid-Verbindung, das mindestens eine Härtungsmittel für die Polyaddition (A) ein Amin und gegebenenfalls die Verbindung mit zwei funktionellen Gruppen (e), eine Verbindung mit zwei funktionellen Gruppen ist, wovon eine radikalisch (co)polymerisieren kann und die andere eine Epoxid-Gruppe ist.

9. Verpackung nach einem der vorhergehenden Ansprüche, **dadurch gekennzeichnet, dass** das Gebinde ein Foliengebinde mit einem ersten Folienbeutel **Fb1** und einem zweiten Folienbeutel **Fb2** ist.

10. Verpackung nach Anspruch 9, **dadurch gekennzeichnet, dass** an dem Foliengebinde ferner ein Kopfteil mit zumindest zwei Aufnahmeabschnitten für jeweils ein Ende eines Folienbeutels vorgesehen ist.

## Claims

1. Packaging for multi-component adhesive, which comprises
**(I)** a resin component with
**(a)** at least one compound that may be radically polymerised,
**(b)** at least one compound that may be polymerised through polyaddition
**(c)** at least one accelerator,
**(d)** at least one inhibitor and
**(e)** if necessary at least one compound with two functional groups, one of which may (co)polymerise radically and the other through polyaddition, and
**(II)** a hardener component with
(A) at least one hardening agent for polyaddition and
**(B)** at least one radical initiator,
with
a first section **A1,** which contains at least three individual components of the multi-component adhesive,
a second section **A2,** arranged separately from it, which contains at least two individual components of the multi-component adhesive,
in which the individual components of the multi-component adhesive are distributed over both sections **A1** and **A2** in such a way that hardening of the adhesive only happens after complete mixing of the individual components and a reaction between the individual components is prevented, **characterised in that**
the at least three individual components of the multi-component mortar system are provided in separate chambers **K1** and **K2** in the first section **A1,** in which a first chamber **K1** contains
**(a)** at least one compound that may be radically polymerised,
**(d)** at least one inhibitor and
**(e)** if necessary at least one compound with two functional groups, one of which may (co)polymerise radically and the other through polyaddition,
and a second chamber **K2** contains
**(A)** the hardening agent for polyaddition and
**(c)** at least one accelerator.

2. Packaging according to claim 1, in which the first section **A1** contains
**(a)** at least one compound that may be radically polymerised,
**(c)** at least one accelerator,
**(A)** at least one hardening agent for polyaddition,
**(d)** at least one inhibitor and
**(e)** if necessary at least one compound with two functional groups, one of which may (co)polymerise radically and the other through polyaddition,
and the second section **A2** contains
**(b)** at least one compound that may be polymerised through polyaddition and
**(B)** at least one radical initiator.

3. Packaging according to claim 1 or 2, in which also at least one more reactive diluent for the compound that may be radically polymerised is contained in the first chamber **K1** of the first section **A1.**

4. Packaging according to one of the previous claims, in which the mixing ratio of the first section **A1** to the second section **A2** A1 :A2 is between 1:1 and 10:1.

5. Packaging according to claim 4, in which the mixing ratio A1 :A2 is 3:1 or 5:1.

6. Packaging according to one of the previous claims, in which the mixing ratio of the first chamber **K1** to the second chamber **K2** is 4:1 to 1:4.

7. Packaging according to claim 6, in which the mixing ratio of the first chamber **K1** to the second chamber **K2** is 4:1 to 1:1.

8. Packaging according to one of the previous claims, in which the at least one compound that may be poymerised through polyaddition (b) is an epoxide compound, the at least one hardening agent for polyaddition (A) is an amine and if necessary the compound with two functional groups (e) is a compound with two functional groups, one of which may (co)polymerise radically and the other is an epoxide group.

9. Packaging according to one of the previous claims, **characterised in that** the pack is a foil pack with a first foil bag **Fb1** and a second foil bag **Fb2.**

10. Packaging according to claim 9, **characterised in that** a head part with at least two receiving sections, each for one end of a foil bag, is provided on the foil pack.

## Revendications

1. Emballage pour liant multicomposant, qui comprend
(I) un composant résine, contenant
(a) au moins un composé polymérisable par polymérisation radicalaire,
(b) au moins un composé polymérisable par polyaddition,
(c) au moins un accélérateur,
(d) au moins un inhibiteur, et
(e) éventuellement au moins un composé comportant deux groupes fonctionnels, dont l'un peut être (co)polymérisé par polymérisation radicalaire et l'autre par polyaddition, et
(II) un composant durcisseur, contenant
(A) au moins un durcisseur pour la polyaddition, et
(B) au moins un amorceur radicalaire,
comportant un premier segment A1, qui contient au moins trois composants individuels du liant multicomposant,
un deuxième segment A2, disposé séparément de ce dernier, qui contient au moins deux composants individuels du liant multicomposant,
les composants individuels du liant multicomposant étant répartis entre les deux segments A1 et A2 de telle sorte qu'un durcissement du liant ne se produise qu'après le mélange complet des composants individuels et qu'une réaction soit empêchée entre les composants individuels, **caractérisé en ce que**
les au moins trois composants individuels du système de mortier multicomposant sont prévus dans le premier segment A1 dans des compartiments distincts K1 et K2, un premier compartiment K1 contenant
(a) au moins un composé polymérisable par polymérisation radicalaire,
(d) au moins un inhibiteur, et
(e) éventuellement au moins un composé comportant deux groupes fonctionnels, dont l'un peut être (co)polymérisé par polymérisation radicalaire et l'autre par polyaddition,
et un deuxième compartiment K2 qui contient
(A) le durcisseur pour la polyaddition et
(c) au moins un accélérateur.

2. Emballage selon la revendication 1, dans lequel le premier segment A1 contient
(a) au moins un composé polymérisable par polymérisation radicalaire,
(c) au moins un accélérateur,
(A) au moins un durcisseur pour la polyaddition,
(d) au moins un inhibiteur et
(e) éventuellement au moins un composé comportant deux groupes fonctionnels, dont l'un peut être (co)polymérisé par polymérisation radicalaire et l'autre par polyaddition,
et le deuxième segment A2 contient
(b) au moins un composé polymérisable par polyaddition, et
(B) au moins un amorceur radicalaire.

3. Emballage selon la revendication 1 ou 2, dans lequel, dans le premier compartiment K1 du premier segment A1, est en outre encore présent au moins un diluant réactif pour le composé polymérisable par polymérisation radicalaire.

4. Emballage selon l'une des revendications précédentes, dans lequel le rapport de mélange du premier segment A1 au deuxième segment A2 A1:A2 est compris entre 1:1 et 10:1.

5. Emballage selon la revendication 4, dans lequel le rapport de mélange A1:A2 est de 3:1 ou de 5:1.

6. Emballage selon l'une des revendications précédentes, dans lequel le rapport de mélange du premier compartiment K1 au deuxième compartiment K2 est de 4:1 à 1:4.

7. Emballage selon la revendication 6, dans lequel le rapport de mélange du premier compartiment K1 au deuxième compartiment K2 est de 4:1 à 1:1.

8. Emballage selon l'une des revendications précédentes, dans lequel l'au moins un composé (b) polymérisable par polyaddition est un composé époxyde, l'au moins un durcisseur pour la polyaddition (A) est une amine et éventuellement un composé comportant deux groupes fonctionnels (e), un composé comportant deux groupes fonctionnels, dont l'un peut être copolymérisé par polymérisation radicalaire et l'autre est un groupe époxyde.

9. Emballage selon l'une des revendications précédentes, **caractérisé en ce que** le récipient est un récipient en film, comportant un premier sachet en film Fb1 et un deuxième sachet en film Fb2.

10. Emballage selon la revendication 9, **caractérisé en ce qu'**il est en outre prévu sur le récipient en film une partie tête, comportant au moins deux segments récepteurs, destinés chacun à une extrémité d'un sachet en film.
